# EUROPEAN PATENT APPLICATION

(11) **EP 1 561 777 A2**
(43) Date of publication of application: **10.08.2005**
(21) Application number: 05290002.4
(22) Date of filing: 04.01.2005
(51) Int. Cl.: C08J 9/14

(54) **Pentane-blown foams**

(30) Priority: 09.02.2004 US 774973
(71) Applicant: Arkema Inc., Philadelphia, PA 19103-3222 (US)
(72) Inventor: Wu, Jinhuang, Norristown, Pennsylvania 19403 (US); Bertelo, Christopher A., Doylestown, Pennsylvania 18901 (US)
(74) Representative: Dang, Doris

(57) **Abstract**

A method for improving pentane-blown foam is provided, which method comprises incorporating into the foam composition trans-1,2-dichlorethylene in an amount effective to suppress the smoke generation of the blown foam.

## Description

### BACKGROUND OF THE INVENTION

This invention relates to the use of trans-1 ,2-dichloroethylene ("Trans 12") to suppress the smoke generation, as measured by ASTM E 1354-02d in terms of reduced specific extinction area upon combustion, of pentane-blown, closed cell polymer (insulation) foams, such as polystyrene, phenolic and polyurethane foams.

While Patent Application Publication No. US 2003-0225165-A1 discloses that certain pentane/Trans-12 blends improve the fire resistance properties of foams, it would be useful to also be able to produce foams having suppressed smoke generation.

### BRIEF SUMMARY OF THE INVENTION

A method for improving pentane-blown foam is provided, which method comprises incorporating into the foam composition Trans-12 in an amount effective to suppress the smoke generation of the blown foam, as well as pentane-based foam blowing agent compositions containing Trans 12 in an amount effective to suppress the smoke generation of the blown foam; polyurethane foam compositions comprising a polyol, an isocyanate and the aforesaid blowing agent composition; and foam premix compositions comprising a polyol and the aforesaid blowing agent composition. One or more pentanes are used in these processes and compositions, such as one or more of n-pentane, iso-pentane and cyclopentane. Among the pentane blends to which the Trans 12 can be added are blends of n-pentane with iso-pentane and of cyclopentane with iso-pentane. The amount of Trans 12 found to be effective for smoke suppression is from about 10 to 60 mole % (preferably 10 to 50 mole %), based on combined amount of the Trans 12 and the pentane blowing agent.

### DETAILED DESCRIPTION

It has now been found that the use of certain amounts of Trans 12 is effective to suppress the smoke generation of pentane-blown foams. As noted above, the use of Trans 12 is particularly useful for making closed cell polymer (insulation) foams such as polystyrene, phenolic and polyurethane foams. This discovery allows one to use higher levels of flame suppressant, if so desired, such flame suppressants having the drawback of increasing smoke generation.

In a polyurethane foam formulation, the Trans 12/pentane blend usually amounts to about 0.1-25 weight % (preferably 0.5-15 weight %), based on the weight of the total polyurethane foam formulation. In the premix compositions, the Trans 12/pentane blend usually amounts to about 2-60 weight % (preferably 5-40 weight %), based on the weight of the polyol.

The Trans 12 can be added to the "A" or "B" side of the foam formulation, or distributed between the "A" and "B" sides, if so desired. The Trans 12 can be added to the foam formulation separately or with the pentane in a (blowing agent) premix blend.

The other components of the premix and foam formulations may be those which are conventionally used, which components and their proportions are well known to those skilled in the art. For example, fire retardants, surfactants and polyol are typical components of the B-side, while the A-side is primarily comprised of polyisocyanate. Water is frequently used as a coblowing agent. The A and B sides are typically mixed together, followed by injection of the catalyst, after which the mixture is poured into a mold or box.

The practice of the invention is illustrated in more detail in the following non-limiting examples which compare the performance of pentane-blown foam without Trans 12 to the performance of such foams wherein the blowing agent composition contains 10 or 25 mole % of Trans 12. The formulations used (all having an Iso Index of 300) each contained 170.51 parts M-489, a polymeric methane diphenyl diisocyanate available from Bayer Corporation; 100 parts PS2352, a polyester polyol having a hydroxyl number of 230-250 available from the Stepan Company; 0.24 part PC-5 and 0.44 part PC-46, which are, respectively, pentamethyldiethylenetriamine and potassium acetate in ethylene glycol, catalysts available from Air Products; 2.57 parts K-15, potassium octoate in dipropylene glycol, a catalyst available from Air Products; 2 parts B-8462, a polysiloxane-polyether copolymer surfactant available from Goldschmidt Chemical Corporation; 10 parts AB-80, a tris(1-chloro-2-propyl)phosphate fire retardant available from Albright & Wilson Americas, Inc.; and about 24-27 parts blowing agent composition of pentane(s) and Trans 12, the exact amounts of which are more particularly set forth below in Tables 1-4; all parts are by weight, except the amounts in parentheses which represent mole % Trans 12:

**Table 1.**

| n-pentane/Trans 12 | | | |
|---|---|---|---|
| **Component** | **Parts (0)** | **Parts (10)** | **Parts (25)** |
| n-pentane | 24.55 | 22.10 | 18.41 |
| Trans 12 | 0 | 3.31 | 8.27 |

**Table 2.**

| iso-pentane/Trans 12 | | | |
|---|---|---|---|
| **Component** | **Parts (0)** | **Parts (10)** | **Parts (25)** |
| iso-pentane | 24.55 | 22.10 | 18.41 |
| Trans 12 | 0 | 3.31 | 8.27 |

**Table 3.**

| Hydrosol Pentane/Trans 12 | | | |
|---|---|---|---|
| **Component** | **Parts (0)** | **Parts (10)** | **Parts (25)** |
| Hydrosol Pentane | 24.55 | 22.10 | 18.41 |
| Trans 12 | 0 | 3.31 | 8.27 |

**Table 4.**

| cyclopentane/Trans 12 | | | |
|---|---|---|---|
| **Component** | **Parts (0)** | **Parts (10)** | **Parts (25)** |
| cyclopentane | 23.87 | 21.48 | 17.90 |
| Trans 12 | 0 | 3.31 | 8.27 |

The A-side (M489) and B-side (a mixture of the polyol, surfactant, fire retardant, and blowing agent composition) were each cooled to 10°C, then mixed, after which the catalyst mixture was injected. After further mixing for about 16-18 seconds, the mixture was poured into a box. The smoke generation performance of the foams was evaluated with a cone calorimeter test, according to standard ASTM E 1354-02d. The thermal flux applied on the specimen surface is 50 kilowatts per square meter. The specimens tested had a size of 100 mm by 100 mm with a thickness of 50 mm. Three specimens were used for each formulation and the results were averaged. The total smoke development (reported according to ASTM E 1354 as the specific extinction area or "SEA") is reported in Table 5 below and shows that Trans 12 was effective in all cases to suppress the smoke generation of foams blown with pentane(s) alone.

**Table 5:**

| Cone Calorimeter Test Smoke Density Results | |
|---|---|
| **Foam ID** | **SEA (m**^{**2**}**/Kg)** |
| n-pentane only | 393 |
| n-pentane with 10 mole% Trans 12 | 321 |
| n-pentane with 25 mole% Trans 12 | 319 |
| iso-pentane only | 444 |
| iso-pentane with 10 mole% Trans 12 | 397 |
| iso-pentane with 25 mole% Trans 12 | 324 |
| Hydrosol pentane* only | 395 |
| Hydrosol pentane with 10 mole% Trans 12 | 302 |
| Hydrosol pentane with 25 mole% Trans 12 | 299 |
| Cyclopentane only | 458 |
| Cyclopentane with 10 mole% Trans 12 | 397 |
| Cyclopentane with 25 mole% Trans 12 | 357 |

| | |
|---|---|
| * Hydrosol pentane (also known as Hydrosol) is a blend of n-pentane and isopentane containing 75 to 78% by weight of n-pentane. It is produced by Total. | |

## Claims

1. A method for improving foams blown with one or more pentanes which comprises incorporating into the foam composition trans-1,2-dichloroethylene in an amount effective to suppress the smoke generation of the blown foam.

2. The method of claim 1 wherein the amount of trans-1,2-dichloroethylene incorporated into the foam composition is 10-50 mole %, based on the combined amount of trans-1 ,2-dichloroethylene and the pentane blowing agent(s).

3. A foam blowing agent composition containing trans-1,2-dichloroethylene and one or more pentanes in an amount effective to suppress the smoke generation of the blown foam.

4. The blowing agent composition of Claim 3 wherein the pentane is n-pentane, iso-pentane or cyclopentane.

5. The blowing agent composition of Claim 3 wherein the pentane is a blend of n-pentane and iso-pentane.

6. The blowing agent composition of Claim 3 wherein the pentane is a blend of cyclopentane and iso-pentane.

7. A method of Claim 1 or 2 wherein the pentane is n-pentane, iso-pentane or cyclopentane.

8. A method of Claim 1 or 2 wherein the pentane is a blend of iso-pentane and n-pentane or cyclopentane.

9. A polyurethane foam composition comprising an isocyanate, a polyol and the foam blowing agent composition of Claims 3 to 6.

10. A foam premix composition comprising a polyol and the foam blowing agent composition of Claims 3 to 6.
